# EUROPÄISCHE PATENTANMELDUNG

(11) **EP 1 018 575 A2**
(43) Veröffentlichungstag der Anmeldung: **12.07.2000**
(21) Anmeldenummer: 99126264.3
(22) Anmeldetag: 31.12.1999
(51) Int. Cl.: E02B 3/10

(54) **Hochwasser Stausystem**

(30) Priorität: 04.01.1999 DE 29902453 U; 11.05.1999 DE 19921741
(71) Anmelder: von Hagen, Ewald, 63834 Sulzbach/Main (DE); von Hagen, Heike Manuela, 63512 Hainburg (DE)
(72) Erfinder: von Hagen, Ewald, 63834 Sulzbach/Main (DE); von Hagen, Heike Manuela, 63512 Hainburg (DE)

(57) **Zusammenfassung**

Durch Einbringen einer Ankerschiene sowie eines Ankerfußes in ein Betonverbund, welches Hauptbestandteil dieses Systems ist, ist der Hauptschritt schon getan.
In den Ankerfuß wird nun der Ankermast eingesetzt und mit 90 Grad Verdrehung verankert.
Im Ankermast befindet sich eine Plattenaufnahme, welche mit einer Gegendruckschiene ausgestattet ist.
Im mittleren Mastteil wurden 2 Excenter eingesetzt, welche Druckschiene gegen Gummidichtung der Stauplatte verpresst. Hierdurch wird die Stauplatte im horizontalen Bereich verdichtet.

Da die Stauplatte mit der unteren Waagerechten in die Bodenankerschiene eingreift, wird hier in Verbindung mit dem Ankermast ein verwindungsfester Anker gesetzt, sodass auch hier eine sichere Komponente geschaffen worden ist.

Ein weiterer Vorteil des Systems besteht darin, dass jederzeit eine Verschottungswand durch lösen des Excenters abgebaut werden kann.

Ferner ist das System auch für den Bau von Vorratsbecken bei den Kommunen zu verwenden durch Einsatz von Eckmast und Gegendruckankerstütze. Somit können auch hier wesentlich Kosten eingespart werden.

## Beschreibung

Durch die hohen Wasserschäden in den Fluß- und Seegebieten durch Hochwasser in den letzten Jahren war es an der Zeit ein System zu entwickeln, dass der Landschaft sowie der städtebaulichen Entwicklung gerecht wird.

Es ist in seiner Art einfach zu bedienen und auch bei Beschädigungen von Einzelteilen jederzeit kurzfristig auszuwechseln, da das System aus Einzelteilen besteht.

### BEZUGZEICHENLISTE

- Seite 1: 1 Bodenankerfuß (Hauptmast)
- Seite 2: 2 Bodenankerschiene
- Seite 3: 3 Drehkranz
14 Drehkranz-Feder
15 Rasternut
- Seite 4: 8 Excenter-Deckel
17 Absteifung
18 Ankerfuß
19 Mastverlängerungs-Aufnahme
- Seite 5: 5 Mast-Druckschiene
- Seite 6: 6 Excenter-Druckbolzen
7 Excenter
22 Schlüssel-Aufnahme
- Seite 7: 8 Excenter-Deckel
- Seite 8: 11 Dichtgummi-Aufnahme
20 Stauplatte mit Raster
21 Steckbolzen-Aufnahme
- Seite 9: 9 Dichtprofil
- Seite 10: 13 Wand-Mast
17 Absteifung
25 Ankerfuß
26 Wandwinkel
11 Dichtgummi-Aufnahme
- Seite 11: 11 Dichtgummi-Aufnahme
9 Dichtprofil
5 Druckschiene
- Seite 12: 23 Masthaube mit 3fach-Aufnahme
24 Knotenblech
- Seite 13: 28 Eck-Mast
5 Druckschiene
29 Bodenankerfuß-Eckmast mit Raster
14 Drehkranzfeder
- Seite 14: 27 Druckschraube mit Eckmast
- Seite 15: 30 Aufstock-Mast mit Excenterdeckel

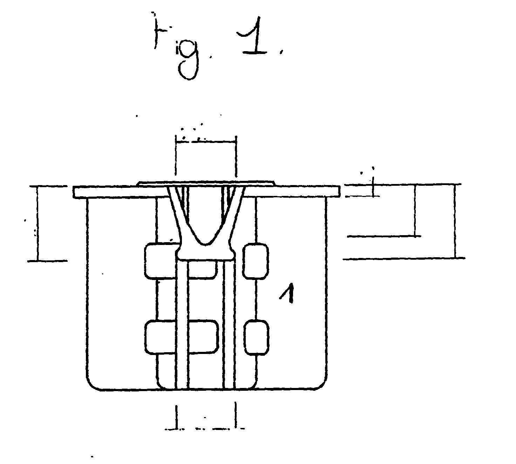

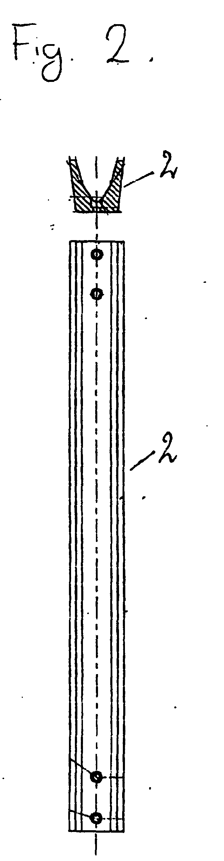

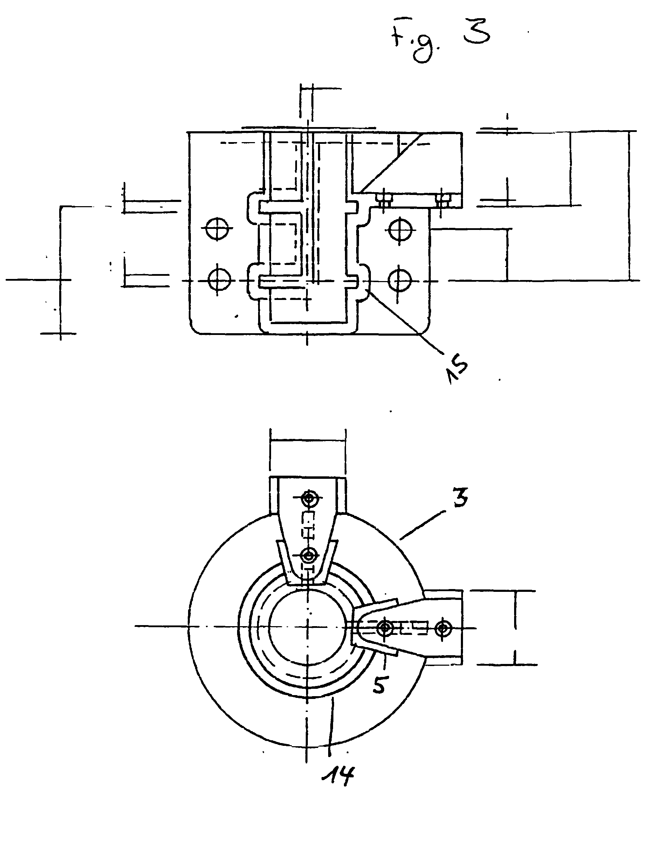

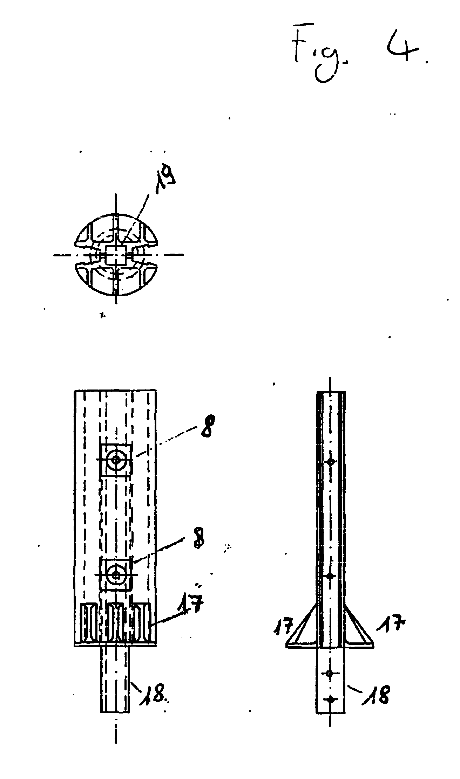

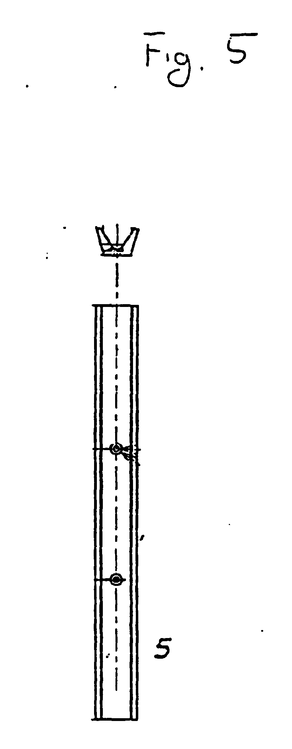

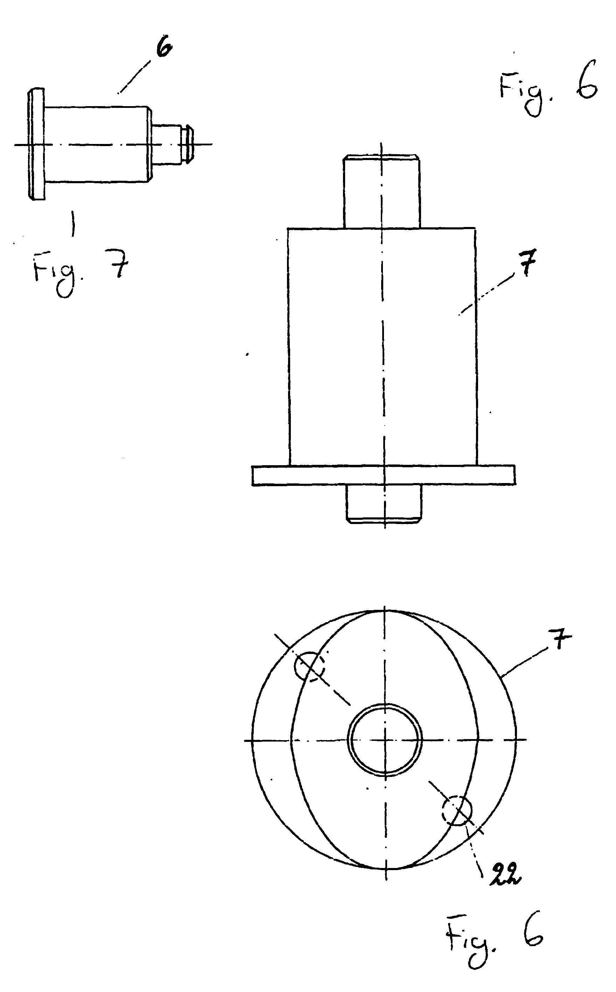

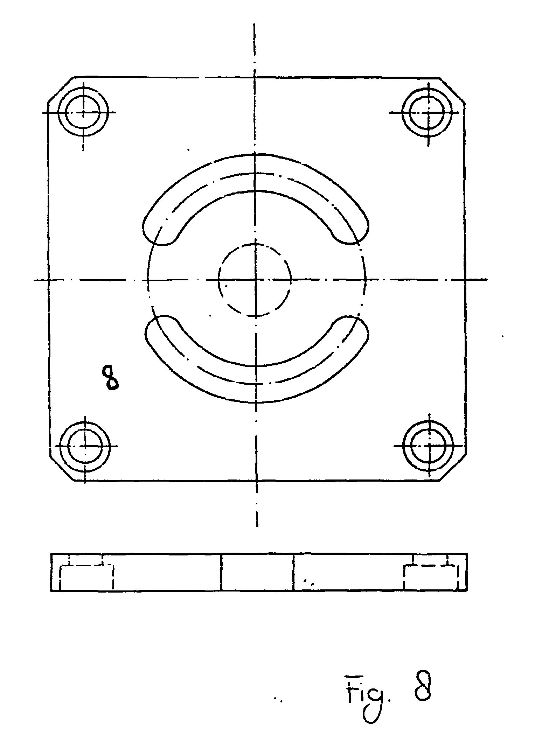

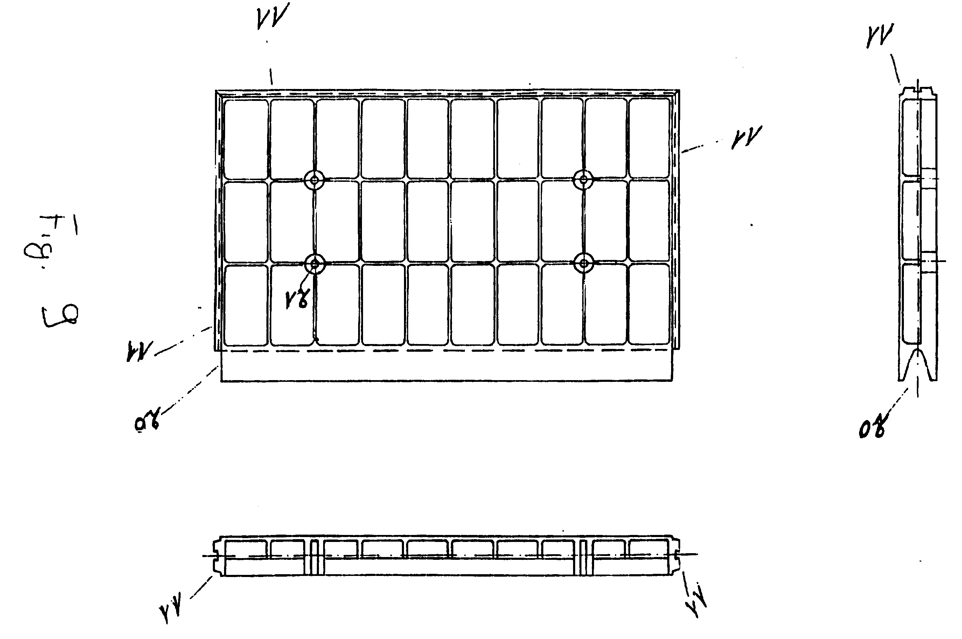

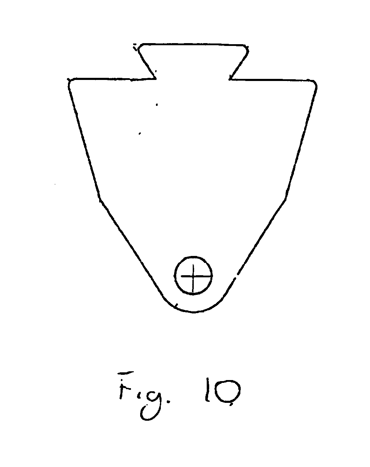

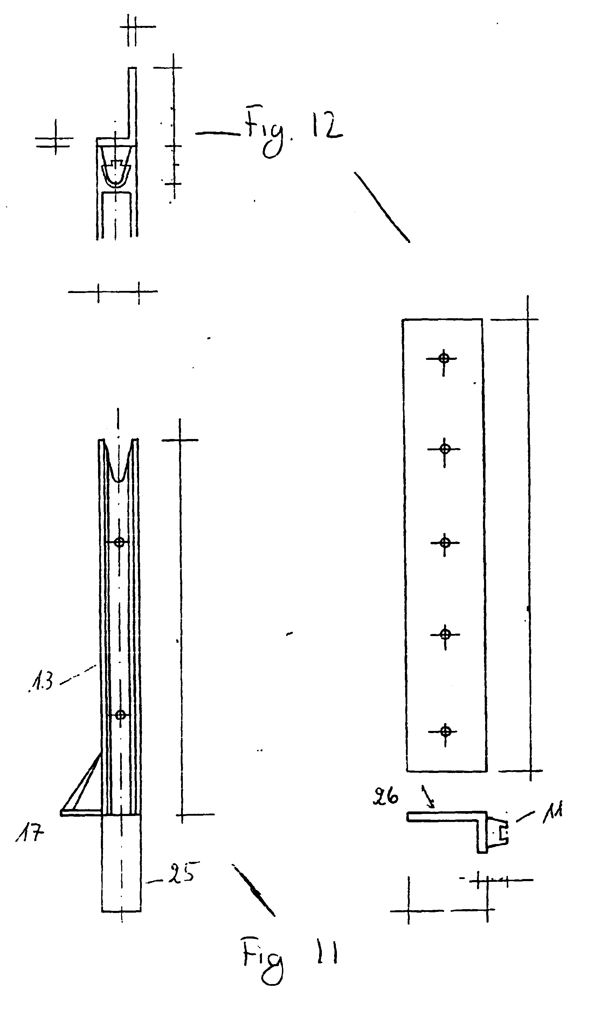

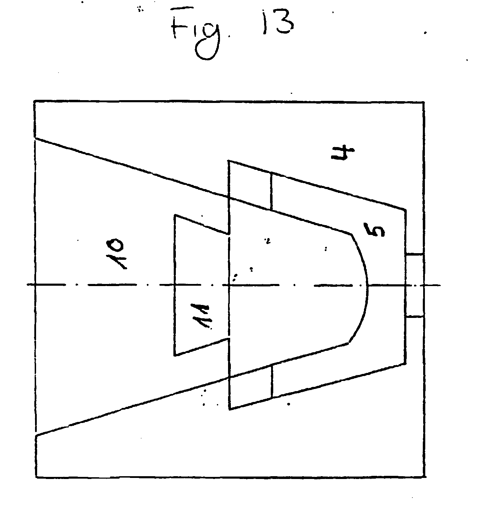

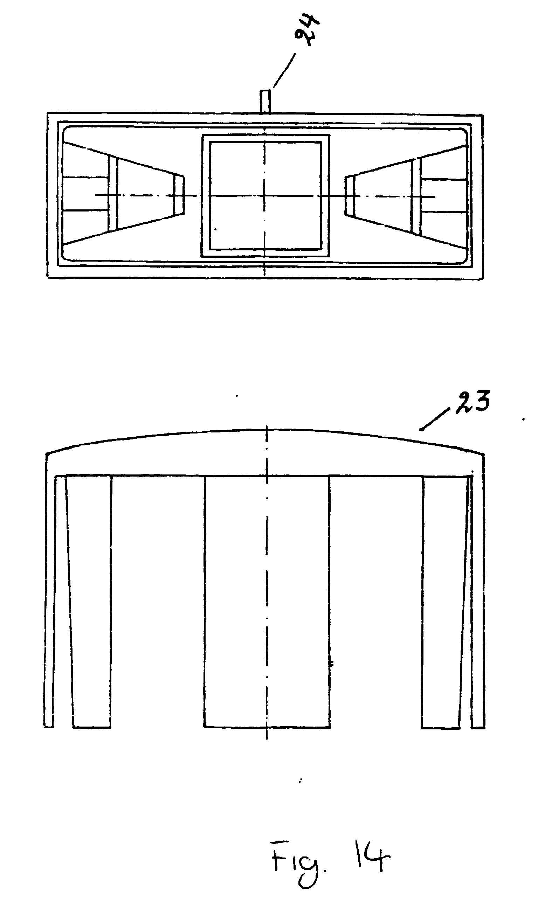

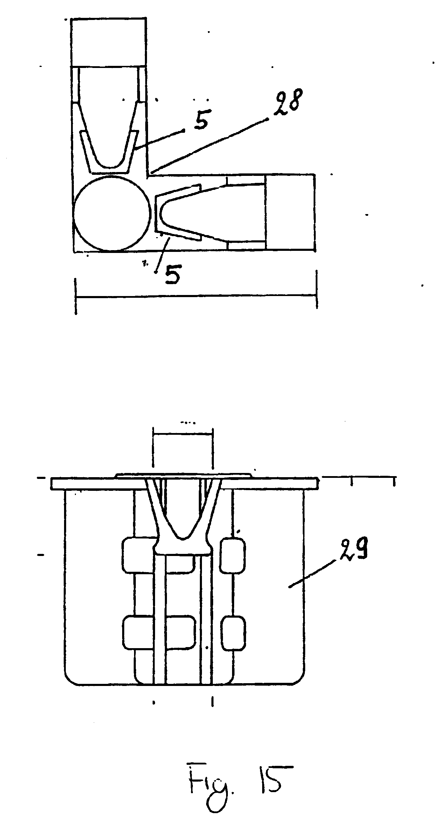

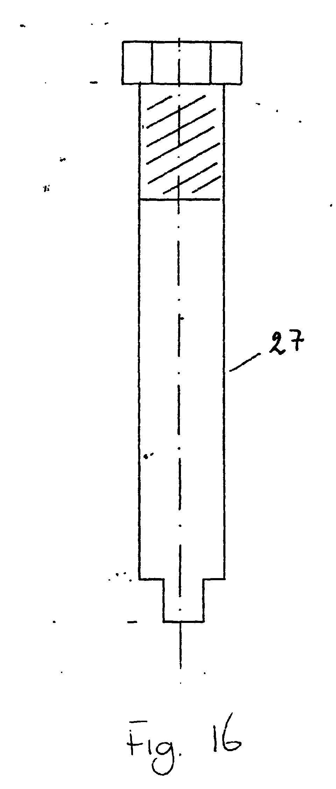

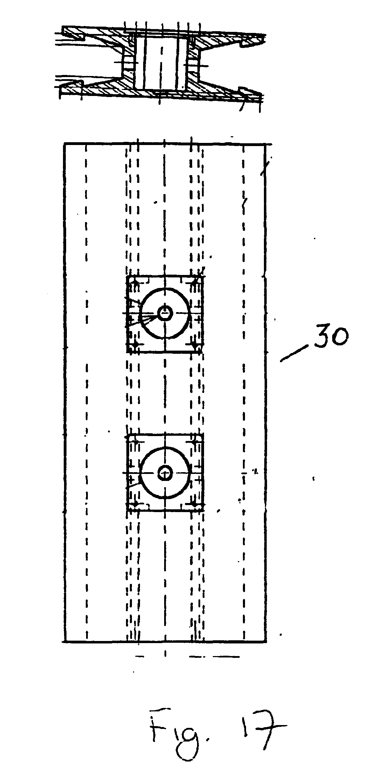

## Patentansprüche

1. Dadurch gekennzeichnet, dass das System aus Einzelteilen besteht.

2. Dadurch gekennzeichnet, dass das System variabel ist.

3. Dadurch gekennzeichnet, dass das System aus einer Stauplatte, Ankermast mit Doppelanker/Bodenanker für Mast und Bodenschienenanker zur Aufnahme der Stauplatte besteht.

4. Dadurch gekennzeichnet, dass Stauplatte im horizontalen sowie in dem unteren waagerechten Bereich mit einer Dichtung (Kautschuk oder ähnlichem) versehen ist.

5. Dadurch gekennzeichnet, dass die Stauplatte im oberen waagerechten Bereich eine keilförmige Auskehlung besitzt zur Aufnahme einer fortführenden Stauwand.

6. Dadurch gekennzeichnet, dass Stauplatte aus einer oder zwei glatten Flußseiten bestehen kann.

7. Dadurch gekennzeichnet, dass Stauplatte aus einer glatten und mit einer Rasterseite hergestellt sein kann.

8. Dadurch gekennzeichnet, dass Stauplatte auf horizontalen Seiten und untere waagerechte Unterkante einen abgestumpften Keil aufweist mit eingebrachter Schwalbenschwanzauskerbung zur Aufnahme des Dichtprofils.

9. Dadurch gekennzeichnet, dass an den horizontalen Seiten sowie an der abgestumpften waagerechten Unterseite der Stauplatte ein Dichtprofil angebracht ist.(verschraubt usw.)

10. Dadurch gekennzeichnet, dass Stauplatte in dem horizontalen sowie im unteren waagerechten Bereich mit Halte- oder Stecknocken versehen ist.

11. Dadurch gekennzeichnet, dass Stauplatte von einem Raster-Federdruckbügel im unteren Bereich mit dem Bodenschienenanker durch Auflegen des Rasterdruckbügels auf die Nockenhalterung, Bodenschiene sowie Stauplatte durch Zug verdichtet wird.

12. Dadurch gekennzeichnet, dass der Gegendruckbügel aus zwei Zugfedern und zwei Federbolzen besteht.

13. Dadurch gekennzeichnet, dass Bodenfußanker zur Aufnahme des Ankerfußes des Stauplattenhaltemasts innenliegende Nut aufweist, welche eine Verriegelung des Haltemasts zulässt.

14. Dadurch gekennzeichnet, dass Stauplattenhaltemast mit einem Doppelkreuz ausgebildetem Doppelanker oder ähnlichem versehen ist.

15. Dadurch gekennzeichnet, dass Haltemast einen Drehteller mit eingebrachter Nut mit Dichtung hat zur Abdeckung der Ankerschlitze vom Bodenankerfuß.

16. Dadurch gekennzeichnet, dass Ankermast zwei horizontale gegenüberliegende keilförmige Auskehlungen besitzt zur Aufnahme der Stauplatte.

17. Dadurch gekennzeichnet, dass in den Auskehlungen Druckschienen eingebracht sind.

18. Dadurch gekennzeichnet, dass im Mittelteil des Stauplattenhaltemasts ein oder mehrere Excenter eingebracht sind.

19. Dadurch gekennzeichnet, dass Excenter mit einem oder zwei gegenüberliegenden Führungsdruckstiften ausgestattet sind.

20. Dadurch gekennzeichnet, dass Führungsdruckstift einen Haltekragen zur Aufnahme einer Druckfeder besitzt.

21. Dadurch gekennzeichnet, dass Führungsdruckstift einen keilförmigen Kopf oder abgeschrägten Kopf besitzt.

22. Dadurch gekennzeichnet, dass Führungsstift ein innenliegendes Rechtsgewinde hat.

23. Dadurch gekennzeichnet, dass Druckstift ein Rechts- und ein Linksgewinde hat.

24. Dadurch gekennzeichnet, dass Führungsdruckstift mit Druckfeder und Druckstift mit seinem Rechtsgewinde in Führungsbolzen eingedreht ist.

25. Dadurch gekennzeichnet, dass Druckschiene in Auskehlung des Aufnahmemasts mit Linksgewindebohrung versehen ist zur Aufnahme des Druckstiftteils mit Linksgewinde, wodurch eine Druckeinstellung zwischen Excenter und Druckschiene von außen möglich ist.

26. Dadurch gekennzeichnet, dass alle Teile des Systems variabel in Länge, Breite und Höhe angefertigt werden können.

27. Dadurch gekennzeichnet, dass Stauplatte, Haltemast, Ankerfuß sowie Bodenhalteankerschiene in allen Legierungen gegossen oder Teile hiervon gewalst, gepresst oder geschweißt werden können.

28. Dadurch gekennzeichnet, dass Haltemast im Mittelteil eine schachtförmige Aufnahme besitzt zur Verlängerung des Mastes.

29. Dadurch gekennzeichnet, dass der Kappenhut im Haltemast in Schachtaufnahme sowie in Stauplattenaufnahme gesteckt werden kann.

30. Dadurch gekennzeichnet, dass Kappenhut ein Knotenblech oder ähnliches besitzt.
